# EUROPEAN PATENT SPECIFICATION

(11) **EP 3 841 891 B1**
(45) Date of publication and mention of the grant of the patent: **26.04.2023**
(21) Application number: 19383180.7
(22) Date of filing: 23.12.2019
(51) Int. Cl.: A23L 7/196

(54) **QUICK COOK RICE**
SCHNELL KOCHEN REIS
RIZ À CUISSON RAPIDE

(43) Date of publication of application: 30.06.2021
(73) Proprietor: Maria Carmen, Casañ Gimeno, 46970 Catarroja (Valencia) (ES)
(72) Inventor: CASAÑ GIMENO, Maria Carmen, 46970 Catarroja (VALENCIA) (ES); DE LOS REYES CÁNOVAS, Ruth, 46191 VILAMARXANT (Valencia) (ES); ALCAÑIZ COSÍN, Diego, 46191 VILAMARXANT (Valencia) (ES)
(74) Representative: Pons Ariño, Angel

(56) References cited:
- EP-A1- 2 698 068
- WO-A1-01/74177
- WO-A1-83/00802
- WO-A1-97/49300
- CN-A- 109 043 324

## Description

The present invention relates to a method for obtaining a quick cook rice and reducing rice cooking time.

Thus, the invention belongs to the technical field of nutrition, as well as in the paper, cosmetic or pharmaceutical industry.

### STATE OF THE ART

Rice is a worldwide grown grain that serves as a basis food of many countries, as it is a rich source of carbohydrates, particularly in Asia and South America. It is formed by long chains of complex carbohydrates that take time to be broken down. Therefore, the carbohydrates present in rice provide a constant supply of energy. Furthermore, rice has a high level of minerals such as calcium and iron and it is also rich in vitamins, such as niacin, vitamin D, thiamin and riboflavin.

Although there are hundreds of rice varieties, they mainly belong to the taxonomic species *Oryza sativa ssp. Japonica* and *Oryza sativa ssp. Indica.* The indica rice variety corresponds to a more elongate and narrow rice grain and the japonica rice variety corresponds to a medium or short length and round grain rice. In addition to the taxonomic classification, rice varieties are also classified according to their color, aroma and texture. According to the type of recipe, it is advisable to use one or another variety according to its organoleptic qualities.

However, despite all the rice varieties available on the market and their different culinary uses, in recent years the pace of life today and concern for healthy eating have directly affected eating habits and the cooking time spent at homes. Today, consumers demand foods which the cooking or preparation time is as short as possible; in the case of rice, have a shorter cooking time maintaining aroma, texture or flavor quality, as well as its nutritional characteristics.

To meet these consumer needs, alternatives such as pre-cooked or parboiled rice have been developed which need less cooking time. These kinds of rice are obtained by combining pre-drying, steeping or vapor steps, in which the rice is subjected to a partial pre-cooking process, followed by a drying step to remove moisture and facilitate the storage thereof, obtaining a rice which requires less cooking time with respect to conventional dry rice. These techniques have only been able to be successfully applied to long-grain indica rice varieties, but not in japonica round rice varieties.

During the pre-cooking process and subsequent drying, japonica round rice undergoes various modifications affecting its firmness, stickiness, elasticity, cohesiveness, texture, digestibility, viscosity or solubility, among others. One of the most important modifications of the pre-cooked round rice undergoes is the occurrence of cracks in the grains, obtaining a lower quality organoleptic characteristics in pre-cooked rice.

Today, for improving rice organoleptic characteristics, treatment with microwaves has been incorporated in the long rice steeping process. The document Rockembach CT., et al. 2019, J Food Sci 84(8):2222-2227, describes the use of the treatment with microwaves during the previous steeping of the rice, which provides a reduction in the time of the subsequent cooking process, greater gelatinization and a reduction in residual phosphorus with respect to conventional cooking process. However, the cooking process mentioned in said document consists of two steps, one for steeping the sample and another one for gelatinization, which would not be practical for daily use. Furthermore, the nutritional properties after said process are not identified.

The document Zhong Y., et al. 2020, Food Chemistry (304)125432, describes a pretreatment with microwaves previous to annealing in starch extracted from long-grain indica rice varieties, improving the modification of the starch structure and its gelatinization.

WO97/49300 discloses a method of preparing a quick-cooking rice comprising the steps of: providing parboiled rice at a substantially uniform moisture content of above 17% by weight; mechanically manipulating said parboiled rice having a moisture content above 17% by weight in order to generate transverse surface microfissures in the individual grains without substantial plastic deformation of the individual grains; and drying the parboiled rice to microbiological stability to result in a quick-cooking rice having a substantially natural appearance both before and after cooking and having a water absorption rate greater than 220 grams per 100 grams of dry rice after cooking in excess water for eight minutes. The dry heating step (c) is carried out by applying microwave or radio frequency energy to the steamed rice in a sealed vessel under pressure.

In order to reduce the cooking time in japonica rice varieties, the pre-cooking processes and the subsequent drying step cause modifications in the rice organoleptic qualities, it is necessary to develop new methods for reducing rice cooking time without requiring previous steps of steeping or pre-cooking, i.e., they are carried out in dry rice and thus obtain a quick cook rice, preferably a japonica quick cook rice.

### DESCRIPTION OF THE INVENTION

The inventors have developed a method for obtaining a dry quick cook rice, resistant to weevil infection and for reducing rice cooking time, preferably of the *Oryza sativa ssp. Japonica* variety, wherein said method comprising a step of heating with microwaves and wetting the rice grains during said heating step. Said method modifies the porous structure of rice grains increasing the water contact surface, reducing significantly the cooking time maintaining the rice nutritional qualities, in absence of a previous steeping or pre-cooking step, which are harmful to the environment because the waste water from the pre-cooking or steeping is a waste with a high biochemical oxygen demand (BOD).

The inventors heated dry rice grains of *Oryza sativa ssp. Japonica* and *Oryza sativa ssp. Indica* (Oryza sativa ssp.Indica not part of the invention) in a microwave in the optimal thermal zone for the reaching a temperature between 60-90 °C, preferably 65 °C and 80 °C, for 4 to 18 minutes, with water spraying intervals between every 2 and 6 minutes during the heating step to prevent high temperatures, obtaining a time reduction of 50-60 % of the japonica rice variety cooking time and 20-30 % in the indica rice variety cooking time.

Furthermore, this method allows, simultaneously with the cooking time reduction, the weevil disinfection of the rice grains.

Therefore, a first aspect of the present invention relates to a method for obtaining quick cook comprising the following steps: i. heating dry rice grains in microwave equipment to a temperature between 60 °C and 90 °C during 8 minutes, and ii. wetting the surface of the dry rice grains with an aqueous solution every 2 to 6 minutes during step (i), without steeping the dry rice grains, wherein the dry rice grains belong to the species Oryza sativa ssp. Japónica and wherein the aqueous solution used in step (ii) is between 5 and 7 ml of water for every 100 grams of dry rice grains.

The method of the invention reduces between 50 % and 60 % cooking time of the japonica rice variety and between 20% and 30 % cooking time of the indica rice variety with respect to the cooking time required in conventional varieties of japonica or indica type rice, that is, varieties which have not been subjected to any previous method of pre-cooking, steeping, parboiling and/or drying. It is routine practice for a person skilled in the art to determine the suitable cooking time for a conventional variety of japonica or indica type rice, depending on the amount or weight of the rice grains, the characteristics of said variety and the recipe or culinary use required. For example, a cooking time of conventional rice varieties is comprised between 10 and 30 minutes, more specifically between 15 and 25 minutes, depending to the conventional rice variety.

A quick cook rice is obtained by means of the method of the invention. In the present invention, the term "quick cook rice" relates to japonica type rice which requires a cooking time of between 4 and 15 minutes, preferably between 4 and 10 minutes, and even more preferably between 5 and 8 minutes, to reach the suitable softening or cooking state for food consumption.

The method of the invention reduces the rice cooking time in the absence of a steeping or pre-cooking previous step, i.e. modifies the porous structure of dry rice grains, reducing the subsequent cooking time, preventing the appearance of cracks and thus maintaining its organoleptic and nutritional qualities.

The term "dry rice grains" relates to rice grains of the japonica type variety with a moisture content below 11% which have not subjected to any previous steeping or pre-cooking step or to any subsequent drying step before being subjected to the method of the invention.

Step (i) of the method of the invention comprises heating dry rice grains in microwave equipment at a temperature between 60 °C and 90 °C during 8 minutes.

In the present invention, the term "microwave equipment" relates to an equipment, device, household appliance, instrument, machine, mechanism or apparatus which heats food, particularly rice grains, by generating electromagnetic waves which agitate the food molecules, achieving an increase in temperature without causing any alteration to the chemical composition of the food, without degrading it, and thus maintaining its organoleptic qualities.

A person skilled in the art knows the different microwave equipment types of the state of the art. For example, the microwave equipment is selected from the list consisting of: a household microwave, a microwave oven and a microwave tunnel. Likewise, the microwave equipment can combine electromagnetic energy with other energies such as hot air, cold air, infrared and/or vapor, or it can be combined with the application of chemical compounds or products.

It is a routine practice for the person skilled in the art to determine the microwave equipment power in relation to the mass of the food, namely rice grains, needed to reach a temperature between 60°C and 90°C during 8 minutes. In the method of the invention, the microwave equipment power is between 1 and 10 watts per gram (w/g) of dry rice grains, preferably between 1 and 5 w/g, more preferably the microwave equipment power is 1, 1.5, 2, 2.5, 3, 3.5, 4, 4.5 or 5 w/g. In a preferred embodiment, the microwave power of the method of the invention is 2.85 w/g.

In the state of the art, the species *Oryza sativa L.,* commonly referred to as rice, comprises thousands of varieties that can be classified according to the shape and size of the grain, or according to the color, aroma or texture thereof. The most common classification is by size and shape of the grain, and it is divided into two large subspecies: *Oryza sativa ssp. Japonica* and *Oryza sativa ssp. Indica.* The variety *Oryza sativa ssp. Japonica* is characterized by having round, thick and hard grains, with a high flavor and aroma absorption capacity. The variety *Oryza sativa ssp. Indica* is characterized by having long and fine grains.

By the method of the invention a quick cook rice of the species *Oryza sativa ssp. Japonica* or species japonica type is obtained, used interchangeably in the present invention.

Thus, in a preferred embodiment the dry rice grains preferably belong to the species *Oryza sativa ssp. Japonica.*

The dry rice grains of the species *Oryza sativa ssp. Japonica* belong to any one of the subspecies: *temperate japonica, tropical japonica and aromatic japonica.*

Therefore, in another preferred embodiment the subspecies of *Oryza sativa ssp. Japonica* of the method of the invention is selected from the list consisting of: *temperate japonica, tropical japonica* and *aromatic japonica.*

In addition to the taxonomic classification, there are conventional classifications according to the shape, texture, color, aroma and/or food uses and their flavor absorption capacity. There are hundreds of varieties within the japonica species, small or medium sized and round rice grains with high flavor and aroma absorption capacity. The japonica rice variety of the method of the invention is selected from the list consisting, without limitation, of: arborio, carnaroli, vialone, nano, bomba, albufera, glutinous, black venere, tebre, lido, akitakomachi and guadiamar.

Rice is a grain that consists mainly of starch, formed by amylopectin and amylose. Amylopectin and amylose are complex carbohydrates formed by glucose molecule chains, with or without short side branches, respectively. The percentage and the chemical characteristics of amylopectins and amyloses are different in each rice variety.

In the method of the invention, the amylopectins of the japonica rice varieties are characterized by having a certain average chain length, intrinsic viscosity and degree of polymerization.

In the present invention, the term "average chain length" relates to the mean amount of glucose monomers forming an amylopectin chain of a japonica rice variety.

In other preferred embodiment, the amylopectins of *Oryza sativa ssp. Japonica* of the method of the invention comprise an average chain length of less than 20.

In other more preferred embodiment, the amylopectins of *Oryza sativa ssp. Japonica* of the method of the invention comprise an average chain length between 15 and 20, more preferably between 19 and 20.

It is a routine practice for the person skilled in the art to calculate and determine the average chain length of amylopectins. For example, a method for determining the average chain length is anion-exchange high-performance liquid chromatography coupled to an anemometric pulse detector (CLARIA-DPA) described in the document by Chavés-Murillo, C.E., et al. 2012, Starch: vol. 64, issue 9, pages 745-756.

In the present invention, the term "intrinsic viscosity" relates to the measurement of the size or molecular weight of the amylopectins in solution or the degree of polymerization, that is, a measurement of the ability of a polymer molecule to increase the viscosity of a solvent in the absence of intermolecular interactions.

In other even more preferred embodiment, the amylopectins of *Oryza sativa ssp. Japonica* of the method of the invention comprise an intrinsic viscosity of less than 145 ml/g.

In other even more preferred embodiment, the amylopectins of *Oryza sativa ssp. Japonica* of the method of the invention comprise between 130 and 140 ml/g, even more preferably between 134 and 137 ml/g.

It is a routine practice for the person skilled in the art to calculate and determine the intrinsic viscosity of the amylopectins. For example, methods for calculating the intrinsic viscosity are by means of an Ostwald viscometer and gel permeation chromatography (GPC)/size exclusion chromatography (SEC).

In step (i) of the method of the invention, dry rice grains reach a temperature between 60 °C and 90 °C in the microwave equipment during 8 minutes, which allows modifying the porous structure of dry rice grains, significantly reducing the cooking time.

The dry rice grains are heated in step (i) of the method of the invention for 8 minutes. During each cycle of step (i), the dry rice grains of a japonica variety must reach a temperature exceeding 60 °C in order to modify the porous structure of the dry rice grains, and must not exceed 90 °C in order to avoid an excessive heating, which gives rise to the dry rice grain being toasted.

Preferably, the temperature of step (i) is between 65 °C and 80 °C, and more preferably between 70 °C and 80 °C.

Therefore, in other preferred embodiment the temperature of step (i) is between 65 °C and 80 °C, preferably between 70 °C and 80 °C.

In other more preferred embodiment, the temperature of step (i) is selected from the list consisting of: 71 °C, 72 °C, 73 °C, 74 °C, 75 °C, 76 °C, 77 °C, 78 °C, 79 °C and 80 °C.

In other even more preferred embodiment, the temperature of step (i) is 78 °C, preferably 78.2 °C.

In the method of the invention, during step (i) of heating the dry rice grains, surface wetting intervals of said dry rice grains are necessary to prevent the grains from reaching too high temperatures. Thus, the method of the invention also comprises another step, a step (ii), wherein the surface of the dry rice grains is wetted with an aqueous solution every 2 to 6 minutes during step (i).

The term "wet" or "wetting", used interchangeably in the present invention, relates to providing moisture to the dry rice grains by means of the application, impregnation, soaking, spraying or transmission of an aqueous solution onto the surface of said dry rice grains during the step of heating in a microwave.

The wetting of dry rice grains in the method of the present invention is carried out in intervals of every 2 to 6 minutes during the step of heating in a microwave, preferably to be counted from the start of said step of heating or step (i) of the method of the invention. Therefore, in other preferred embodiment the step (ii) of wetting the dry rice grains is carried out every 2, every 3, every 4, every 5 or every 6 minutes during step (i) of the method of the invention, preferably to be counted from the start of said step (i).

In other more preferred embodiment, the step (ii) of wetting the dry rice grains is carried out every 2 minutes during step (i) and is to be counted from the start of said step (i).

As described in the preceding paragraphs of the present invention, the wetting of the rice grains during step (i) is carried out with an aqueous solution.

The term "aqueous solution" relates to a solution or mixture, preferably in liquid or gaseous state, comprising a solvent, or the majority solvent in the case of a mixture of solvents is water.

In the method of the invention, the aqueous solution is selected from the list consisting of: water and solutions with mineral salts compatible with water. These mineral salts are selected from the list consisting, without limitation, of: sodium, potassium and calcium.

In other preferred embodiment, the aqueous solution of step (ii) is water.

In other more preferred embodiment, the aqueous solution of step (ii) is between 5 and 7 ml of water for every 100 grams of dry rice grains.

It is a routine practice for the person skilled in the art the wetting methods. The wetting methods are selected from the list consisting, without limitation, of: spraying, parboiling, atomization and gasification.

As described above, by the method of the invention a quick cook rice having a modified porous structure is obtained, which reaches the soft or cooked state suitable for food consumption maintaining its organoleptic and nutritional qualities in a cooking time of between 4 and 15 minutes, that is, between 20-30 % and 50-60 % less with respect to the cooking time required for conventional japonica type or indica type rice grains.

Therefore, other aspect, not part of the present invention, is a quick cook rice obtained by the method of the invention, hereinafter the rice of the invention, wherein the rice requires a cooking time of between 4 and 15 minutes, preferably between 4 and 10 minutes and even more preferably between 5 and 8 minutes.

In the present invention, the term "cook time" or "cooking time", used interchangeably, refers to the time the consumer must keep the rice in boiling water or in another boiling liquid until the dry rice absorbs the amount of said water or liquid for reaching the suitable soft or suitable cooked states for food consumption, facilitating the chewing and digestion, or softening for other industrial uses such as the manufacture of paper.

It is s routine practice for the person skilled in the art determine the dry rice cooking time, depending on the quantity or weight of the rice grains, the characteristics of the variety rice and the type of recipe or culinary use required.

In a preferred embodiment, the quick cook rice obtained by the method of the present invention requires a cooking time of between 5 and 8 minutes.

In another preferred embodiment, the quick cook rice obtained by the method of the present invention requires a cooking time of 5, 5.5, 6, 6.5, 7, 7.5, or 8 minutes.

The quick cook rice obtained by the method of the invention maintains its organoleptic and nutritional qualities due to the process of heating in a microwave and wetting during said heating step, so said quick cook rice can be used in nutrition or feed.

Therefore, other aspect, not part of the present invention, is the use of the quick cook rice of the invention for nutrition.

As it is used in the present invention, the term "nutrition" or "feed" relates to the nutritional need, to the diet or to the intake of foods comprising suitable amounts of proteins, lipids, carbohydrates, vitamins and minerals that are fundamental for the maintenance of living organisms.

In a preferred embodiment, the use of the quick cook rice obtained by the method of the invention is for animal feed or human nutrition.

Another aspect, not part of the invention, is a processed or unprocessed food product or foodstuff comprising the quick cook rice obtained by the method of the invention.

The term "food product" or "foodstuff ", used interchangeably in the present invention, relates to a substance, compound or product of any nature, solid or liquid, natural or transformed that comprising the rice of the invention, and due to its characteristics, components, preparation and state of preservation, can be eaten and used for animal feed or human nutrition, without being harmful to the living organisms that ingest it.

These food products can be processed or unprocessed. The terms "processed" or "manufactured" or "elaborated", used interchangeably in the present invention, relate to foodstuffs that have been subjected to an industrial or culinary handling processor treatment before being ingested or eaten by living organisms, preferably animals or humans.

The term "unprocessed" or "unelaborated", used interchangeably in the present invention, relates to foodstuffs that have not been subjected to an industrial or culinary process or a minimal transformation, and are suitable for being ingested or eaten in their natural state.

In addition to the use of rice in nutrition, it is known in the state of the art to use of rice as a raw material in many industries, such as, for example, for manufacturing paper, both edible paper and paper used in handicraft, decoration or calligraphy, or in pharmaceutical industries or cosmetic product industries.

Therefore, another aspect, not part of the present invention, is the use of the rice of the invention for manufacturing paper, a drug or a cosmetic.

In a preferred embodiment, the rice obtained by the method of the invention is used for manufacturing edible paper.

In another preferred embodiment, the rice obtained by the method of the invention is used for manufacturing decorative paper or calligraphy paper.

Throughout the description and the claims, the word "comprises" and its variants are not intended to exclude other technical features, additives, components or steps. For those skilled in the art, other objects, advantages and features of the invention may be inferred from both the description and the embodiment of the invention. The following examples and figures are provided by way of example and are not intended to limit the present invention.

### DESCRIPTION OF THE FIGURES

**Fig. 1** shows a drawing of the breaking of a dry rice grain of the japonica variety.
**Fig. 2** shows the characterization of the microwave to determine the area of maximum energy absorption of the microwave and the optimal temperature zone of 78.2 °C.

### EXAMPLES

The invention will be illustrated below by means of several tests carried out by the inventors.

The inventors carried out a previous hydration test with subsequent drying in long, round and whole-grain rice grains. In the particular case of round rice, the inventors found that by means of this previous hydration and subsequent drying test, cracks occurred in the grains due to their high starch content; more than 60 % of the grains broke during production and more than 90 % presented a breakage after one day in storage. These results are shown in Table 1.

**Table 1. Previous hydration and drying test in long, round and whole-grain rice.**

| **Type of rice** | **Appearance** | **% of breakage during production** | **% of breakage after one day in storage** |
|---|---|---|---|
| Round | Between 2 and 4 transverse cracks | >60 | >90 |
| Long | Brittle, but whole | <15 | >50 |
| Whole-grain | Whole | <5 | <5 |

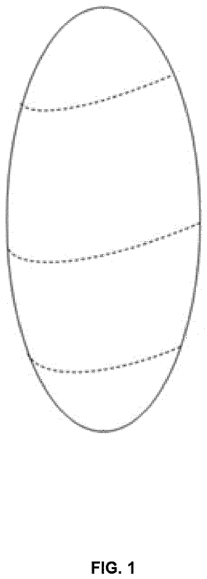

Figure 1 shows the usual arrangement of treatment-generated cracks in round or japonica type rice grains.

To solve this problem, the inventors eliminated the initial phase of steeping and combined microwave drying with water spray to prevent the rice grains from reaching high temperatures that damaged their quality and so that the structure of the starch was not modified and cracks did not occur in the grains either.

The inventors used samples of 80 grams of round japonica rice (senia, carnaroli and bomba varieties) and long indica rice (puntal variety) (indica rice as not part of the invention) and drying times in a microwave of between 4 and 18 minutes, and they subjected them to a water spray intervals between 5 and 7 ml, for every 100 grams of rice, every 2 to 6 minutes during the drying time. All the treatments were performed in a conventional commercial Samsung brand TDS model microwave operating in its power mode of 100 watts (operating at cycles of 750 watts for 8 seconds, and switched off for 52 seconds).

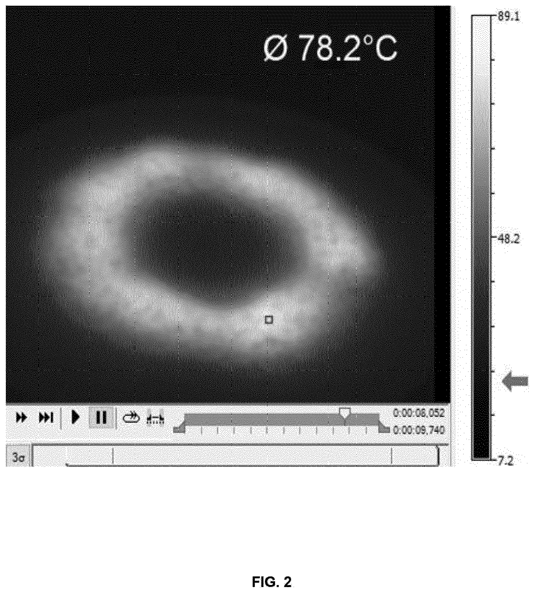

In order to homogeneously apply heat, the inventors performed the characterization of the microwave, that is, they determined the maximum field zone (where the zones with the highest microwave energy absorption are located, and, therefore, the temperature increase is higher and drying is greater) and designed a support on which to perform said drying treatments for the rice grains. This zone with the highest absorption reaches a temperature of up to 78.2 °C. Figure 2 shows the thermal image of the drying surface of the rice samples.

Lastly, in order to evaluate treatment suitability and suitable times, the inventors performed: the evaluation of the consistency of the rice after drying (resistance and no spalling), the cooking times of the rice, drawing samples every minute, and the touch-based evaluation of the consistency, as well as the quantification of the final moisture content. The inventors also verified that the rice was capable of absorbing the seasoning during the established cooking times, obtaining the flavor that is expected and compared to control sample rice.

The optimal conditions were found to be in heating the samples for 8 minutes located on an optimal lighting template designed for a conventional commercial Samsung brand TDS model microwave operating in its power mode of 100 watts (operating at cycles of 750 watts for 8 seconds, and switched off for 52 seconds) (Table 2). Cooking was performed in a metal pot on an electric cooker under identical conditions for all the samples, that is, both the samples subjected to microwave drying and the untreated control samples. Indica rice is not part of the invention and was used only for exemplification.

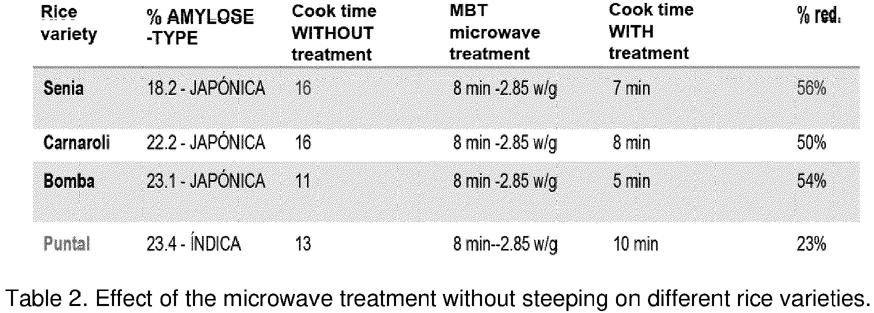

## Claims

1. A method for obtaining quick cook rice comprising the following steps:
(i) heating dry rice grains in microwave equipment to a temperature between 60 °C and 90 °C during 8 minutes, and
(ii) wetting the surface of the dry rice grains with an aqueous solution every 2 to 6 minutes during step (i), without steeping the dry rice grains,
wherein the dry rice grains belong to the species *Oryza sativa ssp. Japonica* and wherein the aqueous solution used in step (ii) is between 5 and 7 ml of water for every 100 grams of dry rice grains.

2. The method according to claim 1, wherein the species *Oryza sativa ssp. Japonica* is selected from the list consisting of: *temperate japonica, tropical japonica* and *aromatic japonica.*

3. The method according to claim 1 or 2, wherein the temperature of step (i) is between 65 °C and 80 °C, preferably between 70 °C and 80 °C.

4. The method according to any one of claims 1 to 3, wherein the wetting of step (ii) takes place every 2 minutes during step (i) and is to be counted from the start of step (i).

## Patentansprüche

1. Verfahren zum Erhalten von Schnellkochreis, umfassend die folgenden Schritte:
(i) Erwärmen von trockenen Reiskörnern in einem Mikrowellengerät auf eine Temperatur zwischen 60 °C und 90 °C für 8 Minuten und
(ii) Benetzen der Oberfläche der trockenen Reiskörner mit einer wässrigen Lösung alle 2 bis 6 Minuten während Schritt (i), ohne die trockenen Reiskörner einzuweichen,
wobei die trockenen Reiskörner zur Spezies *Oryza sativa ssp. Japonica* gehören und wobei die in Schritt (ii) verwendete wässrige Lösung zwischen 5 und 7 ml Wasser pro 100 Gramm trockener Reiskörner ist.

2. Verfahren nach Anspruch 1, wobei die Spezies *Oryza sativa ssp. Japonica* aus der Liste, bestehend aus: *temperierter Japonica, tropischer Japonica* und *aromatischer Japonica,* ausgewählt ist.

3. Verfahren nach Anspruch 1 oder 2, wobei die Temperatur von Schritt (i) zwischen 65 °C und 80 °C, vorzugsweise zwischen 70 °C und 80 °C, liegt.

4. Verfahren nach einem der Ansprüche 1 bis 3, wobei das Benetzen von Schritt (ii) während Schritt (i) alle 2 Minuten stattfindet und ab Beginn von Schritt (i) zu zählen ist.

## Revendications

1. Procédé d'obtention de riz à cuisson rapide comprenant les étapes suivantes :
(i) le chauffage de grains de riz secs dans un équipement à micro-ondes à une température comprise entre 60 °C et 90 °C pendant 8 minutes et
(ii) le mouillage de la surface des grains de riz secs avec une solution aqueuse toutes les 2 à 6 minutes durant l'étape (i), sans tremper les grains de riz secs,
dans lequel les grains de riz secs appartiennent à l'espèce *Oryza sativa ssp. Japonica* et dans lequel la solution aqueuse utilisée à l'étape (ii) est comprise entre 5 et 7 ml d'eau pour 100 grammes de grains de riz secs.

2. Procédé selon la revendication 1, dans lequel l'espèce *Oryza sativa ssp. Japonica* est choisie dans la liste constituée de : *japonica tempéré, japonica tropical* et *japonica aromatique.*

3. Procédé selon la revendication 1 ou 2, dans lequel la température de l'étape (i) est comprise entre 65 °C et 80 °C, de préférence entre 70 °C et 80 °C.

4. Procédé selon l'une quelconque des revendications 1 à 3, dans lequel le mouillage de l'étape (ii) a lieu toutes les 2 minutes durant l'étape (i) et doit être compté à partir du début de l'étape (i).
